# EUROPÄISCHE PATENTANMELDUNG

(11) **EP 0 844 144 A1**
(43) Veröffentlichungstag der Anmeldung: **27.05.1998**
(21) Anmeldenummer: 97120118.1
(22) Anmeldetag: 17.11.1997
(51) Int. Cl.: B60R 21/20

(54) **Gassack-Modul**

(30) Priorität: 21.11.1996 DE 29620298 U
(71) Anmelder: TRW Occupant Restraint Systems GmbH, 73551 Alfdorf (DE)
(72) Erfinder: Dannenhauer, Reiner, 73642 Welzheim (DE)
(74) Vertreter: Degwert, Hartmut, Dipl.-Phys.

(57) **Zusammenfassung**

Ein Gassack-Modul mit einem gefalteten Gassack (12), der einen Einblasmund aufweist, einem Rahmenteil zum Befestigen des Gassacks (12), der im Inneren des Gassacks (12) angeordnet ist und den Einblasmund umgibt, einer rohrförmigen Druckgasquelle (25), die ein Ausströmende (46) aufweist, und einer Befestigungseinrichtung (24), durch die die Lage des Gassacks (12) relativ zur Druckgasquelle (25) festgelegt wird. Die Druckgasquelle (25) erstreckt sich in Längsrichtung im wesentlichen rechtwinkelig zu der durch den Einblasmund definierten Einströmquerschnittsfläche des Gassacks (12) erstreckt.

## Beschreibung

Die Erfindung betrifft ein Gassack-Modul mit einem gefalteten Gassack, der einen Einblasmund aufweist, einem Rahmenteil zum Befestigen des Gassacks, der im Inneren des Gassacks angeordnet ist und den Einblasmund umgibt, einer rohrförmigen Druckgasquelle, die ein Ausströmende aufweist, und einer Befestigungseinrichtung, durch die die Lage des Gassacks relativ zur Druckgasquelle festgelegt wird.

Solche gattungsgemäße Gassack-Module sind dem Fachmann auf dem Gebiet der Fahrzeuginsassen-Sicherheitstechnik bekannt. Üblicherweise wird als Druckgasquelle ein sogenannter Gasgenerator mit einer pyrotechnischen Ladung verwendet, die nach Aktivierung in sehr kurzer Zeit ein vorbestimmtes Gasvolumen freisetzt. Darüber hinaus sind jedoch auch sogenannte HGI-Gasgeneratoren (Heated Gas Inflator) in Gassack-Module eingebaut worden, die sich durch eine gute Umweltverträglichkeit auszeichnen. Zur Befestigung sämtlicher Teile des Moduls sind bislang zahlreiche Einzelteile erforderlich. Die Druckgasquelle selbst wird bislang üblicherweise in einem die Druckgasquelle umschließenden Blechgehäuse untergebracht und darin geklemmt. Das Rahmenteil wird über Schraubbolzen ebenfalls am Blechgehäuse arretiert. Das Blechgehäuse dient nicht nur zur Befestigung sämtlicher Teile und zur Befestigung des Moduls am Fahrzeug, sondern es dient auch der Gasführung. Das Ausströmende der Druckgasquelle, die sich in ihrer Längsrichtung parallel zu der durch den Einblasmund definierten Einströmquerschnittsfläche des Gassacks erstreckt, endet nahe einer Seitenwand des Blechgehäuses. Beim Ausströmen des Gases verteilt sich dieses im Blechgehäuse gleichmäßig und strömt über mehrere Öffnungen in den Gassack ein. Das Blechgehäuse wird durch die Schubkraft, die durch das Austreten des Gases verursacht und über die Druckgasquelle in es eingeleitet wird, hohen Belastungen unterworfen.

Die Erfindung schafft ein Gassack-Modul, das sich durch eine einfachere Herstellung und Montage sowie durch ein reduziertes Gewicht auszeichnet. Zudem ist das gesamte vom Modul eingenommene Volumen geringer als bei bisher bekannten.

Dies wird bei einem Gassack-Modul der eingangs genannten Art dadurch erreicht, daß sich die Druckgasquelle in Längsrichtung im wesentlichen rechtwinkelig zu der durch den Einblasmund definierten Einströmquerschnittsfläche des Gassacks erstreckt. Die Lage der Druckgasquelle relativ zum Gassackmodul erlaubt es, eine kompaktere Befestigungseinrichtung vorzusehen. Die Befestigungseinrichtung muß nicht mehr zusätzlich der Gasführung dienen, denn das Einblasende kann relativ nahe am und mittig zum Einblasmund angeordnet sein. Dadurch ist es möglich, die Teile (Rahmenteil, Druckgasquelle) und das gesamte Modul in einem kleinen Bereich zu erfassen, nämlich nur im Bereich des Einströmendes, um die Teile aneinander und das Modul am Fahrzeug zu befestigen. Es ist nicht mehr zwingend notwendig, daß die Druckgasquelle von einem Gehäuse vollständig umgeben ist. Insgesamt ergeben sich aufgrund der geänderten Bauraumverhältnisse andere Einbaumöglichkeiten des erfindungsgemäßen Gassackmoduls gegenüber bislang bekannten.

Gemäß einer ersten Ausführungsform ist die Befestigungseinrichtung aus mehreren, aneinander arretierbaren Klemmteilen zusammengesetzt, zwischen denen die Druckgasquelle geklemmt ist. Die Befestigungseinrichtung weist eine Öffnung zur Aufnahme und zum radialen Klemmen der Druckgasquelle im Bereich des Ausströmendes auf. Jedes Klemmteil umfaßt eine Teilöffnung, wobei sich die Teilöffnungen zur Aufnahmeöffnung für die Druckgasquelle ergänzen. Die Klemmung der Druckgasquelle kann an einem kreiszylindrischen Mantelabschnitt der Druckgasquelle nahe des Ausströmendes erfolgen. Der Mantelabschnitt weist einen im wesentlichen gleichbleibenden Querschnitt auf. Alternativ oder vorzugsweise zusätzlich wird die Druckgasquelle im Bereich ihres Halsabschnitts geklemmt, der dadurch gebildet ist, daß sich die Druckgasquelle in Richtung Ausströmende hin verjüngt. Da die Befestigungseinrichtung die Druckgasquelle lediglich im Bereich des Ausströmendes, das erfindungsgemäß nahe am Einblasmund angeordnet ist, erfaßt, kann sie sehr kompakt ausgebildet sein.

Vorzugsweise weist die Befestigungseinrichtung einen stirnseitigen Flansch auf, an dem das Rahmenteil arretiert werden kann. Der Gassack wird zwischen dem Rahmenteil und dem Flansch im Bereich des Einblasmundes geklemmt. An den stirnseitigen Flansch ist ferner vorzugsweise ein Rohrabschnitt angeformt, dessen Inneres die Öffnung zur Aufnahme der Druckgasquelle bildet. Die Befestigungseinrichtung kann demnach lediglich aus einem Flansch mit einem relativ kurzen, daran angeformten Rohrabschnitt bestehen und als Kunststoffspritzgußteil oder als Leichtmetalldruckgußteil ausgeführt sein.

Weitere vorteilhafte Ausführungsformen der Erfindung sind in den Unteransprüchen angegeben.

Die Erfindung wird nachfolgend unter Bezugnahme auf eine bevorzugte Ausführungsform beschrieben, die in den Zeichnungen dargestellt ist. In diesen zeigen:
- Figur 1 eine perspektivische Explosionsdarstellung des erfindungsgemäßen Gassack-Moduls;
- Figur 2 eine Längsschnittansicht durch das erfindungsgemäße Gassack-Modul in zusammengebautem Zustand;
- Figur 3 einen Schnitt durch den zusammengefalteten Gassack;
- Figur 4 eine Rückansicht der bei dem erfindungsgemäßen Gassack-Modul verwendeten Befestigungseinrichtung,
- Figur 5 eine perspektivische Explosionsdarstellung einer weiteren Ausführungsform des erfindungsgemäßen Gassack-Moduls von schräg vorn,
- Figur 6 eine Explosionsansicht der weiteren Ausführungsform des Gassack-Moduls von schräg hinten,
- Figur 7 eine Vorderansicht der in den Figuren 5 und 6 ebenfalls gezeigten Befestigungseinrichtung mit montierter Druckgasquelle,
- Figur 8 eine Längsschnittansicht des Gassack-Moduls nach der Linie A-A in Figur 7,
- Figur 9 eine Längsschnittansicht durch das erfindungsgemäße Gassack-Modul nach der Linie B-B in Figur 7, und
- Figur 10 eine Längsschnittansicht durch das erfindungsgemäße Gassack-Modul nach der Linie C-C in Figur 7.

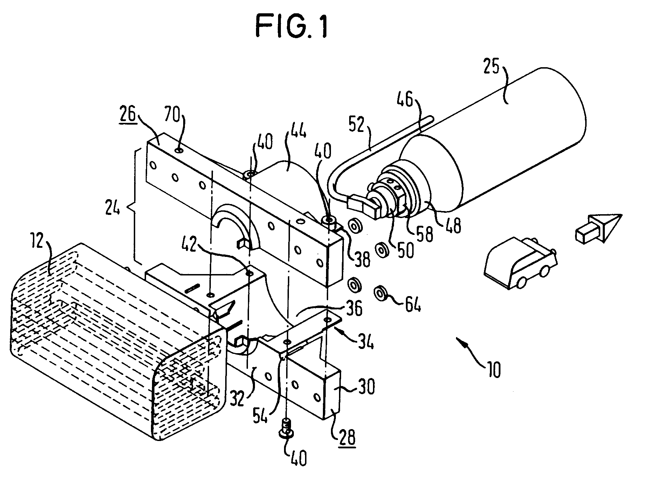

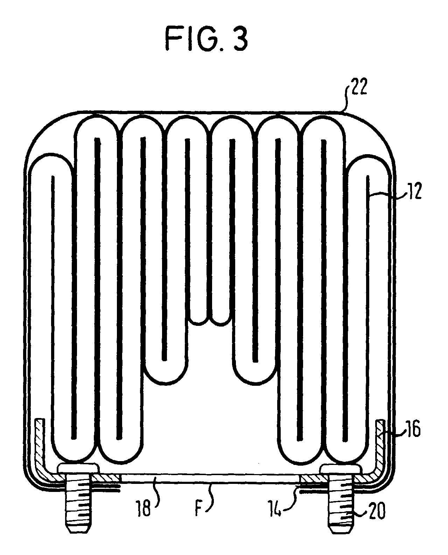

In Figur 1 ist ein Gassack-Modul 10 gezeigt, das in die Armaturentafel eines Fahrzeugs eingebaut werden kann. Das Gassackmodul 10 weist einen in Figur 3 detailierter dargestellten, gefalteten Gassack 12 mit einem Einblasmund 14 auf. Ein Rahmenteil 16 im Inneren des Gassacks 12 umgibt den Einblasmund 14, der eine Einströmöffnung 18 mit einer Einströmquerschnittsfläche F definiert. Vom Inneren des Gassacks 12 aus ragen mehrere am Rahmenteil 16 befestigte Gewindebolzen 20 durch das Rahmenteil 16 und durch nicht gezeigte Öffnungen im Gassack 12 nach außen. Eine Folie 22 umgibt den gefalteten Gassack 12, wodurch eine vormontierte Einheit entsteht. Eine sich daran anschließende Befestigungseinrichtung 24 dient dazu, die Einheit an einer rohrförmigen Druckgasquelle 25 zu befestigen und zusätzlich dazu, das Gassack-Modul 10 am Fahrzeug zu arretieren. Die Lage des eingebauten Gassack-Moduls 10 zum Fahrzeug ist in Figur 1 anhand des stilisiert dargestellten Fahrzeugs erkennbar.

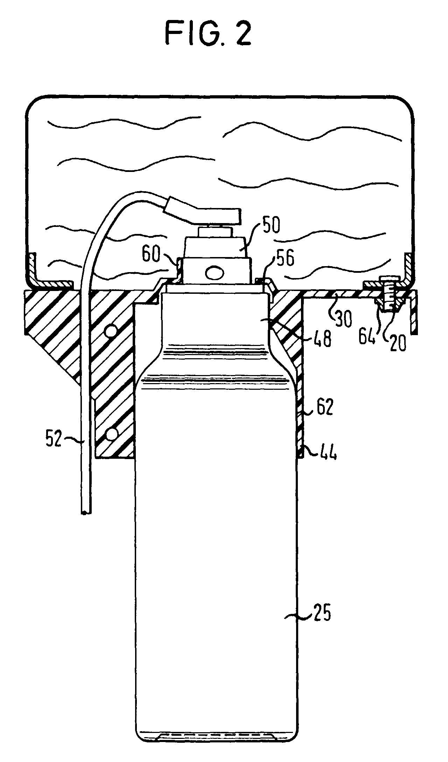

Die Befestigungseinrichtung 24 besteht aus einem oberen Klemmteil 26 und einem unteren Klemmteil 28, welche jeweils eine Hälfte eines plattenartigen stirnseitigen Flansches 30 mit einer zum Gassack 12 gewandten ebenen Vorderseite 32 aufweisen. Rückseitig ist an jeder Hälfte eine Halbschale 34 angeformt, die nach dem Zusammenschrauben der Klemmteile 26, 28 einen Rohrabschnitt 44 (vgl. Figur 2) bilden, in dessen Innerem eine Öffnung 36 zur Aufnahme der Druckgasquelle 25 gebildet ist. Die Öffnung 36 erstreckt sich auch durch die Flansch 30 hindurch. Die Halbschalen 34 haben die Form einer Schellenhälfte mit seitlich radial abstehenden Enden 38. Die Enden 38 des oberen Klemmteils 26 umfassen Durchgangsöffnungen (nicht gezeigt), durch die sich Schrauben 40 erstrecken, welche in Gewinde 42 in den entsprechenden seitlichen Enden im unteren Klemmteil 28 eingedreht werden können, damit die Klemmteile 26, 28 gegeneinandergepreßt werden können. Weitere Schrauben 40 erstrecken sich durch Öffnungen im unteren Klemmteil 28 hindurch in entsprechende (nicht gezeigte) Gewinde im oberen Klemmteil 26. Ferner sind Befestigungsmittel in Form von Gewinden, von denen nur das Gewinde 70 gezeigt ist, zur Arretierung des Gassack-Moduls 10 am Fahrzeug vorgesehen.

Die Druckgasquelle 25 ist durch ein rohrförmiges, kreiszylindrisches Gehäuse gekennzeichnet, das sich zu einem Ausströmende 46 zu einem Halsabschnitt 48 verjüngt. Eine Zündeinrichtung 50 erstreckt sich stirnseitig vom Ausströmende 46 aus in das Innere der Druckgasquelle 25. Ein Zündkabel 52 verbindet den Zünder 50 mit einer nicht gezeigten Auslösevorrichtung, die im Rückhaltefall ein entsprechendes Signal an den Zünder 50 abgibt.

Die Befestigung der einzelnen Teile des Gassack-Moduls 10 geschieht folgendermaßen: Zuerst wird das Zündkabel 52 in einen Kabelführungskanal 54 im unteren Klemmteil 28 gesteckt. Anschließend wird die Druckgasquelle 25 in den im unteren Klemmteil 28 vorgesehenen Abschnitt der Öffnung 36 gelegt und soweit wie möglich in Richtung Gassack 12 geschoben, bis die Druckgasquelle 25 an einem ringförmigen, radial nach innen ragenden, umlaufenden Dichtbund 56, der die Öffnung 36 abschließt, anliegt. Der Dichtbund 56 wird aus zwei Hälften gebildet, die an den Klemmteilen 26, 28 einstückig angeformt sind. Die Lage der Druckgasquelle 25 in Umfangsrichtung wird durch eine mantelseitige Abflachung 58 im Bereich des Zünders 50 sowie eine Drehsperre 60, die an der Abflachung 58 anliegt, festgelegt. Die Drehsperre 60 ist an dem Dichtbund 56 angeformt und steht von diesem axial ab. Wie in Figur 2 zu erkennen ist, ragt die Druckgasquelle 25 in das Innere des Gassacks 12. Nachdem die Druckgasquelle 25 zum unteren Klemmteil 28 ausgerichtet ist, wird das obere Klemmteil 26 aufgesetzt und mit dem unteren über die Schrauben 40 fixiert. Dabei wird die Druckgasquelle 25 einerseits am Halsabschnitt 48 und andererseits einem Mantelabschnitt 62 nahe der Auslaßöffnung 36 radial geklemmt. Anschließend wird die vormontierte Einheit aus Gassack 12 und Rahmenteil 16 am Flansch 30 befestigt, indem Muttern 64 auf die sich durch entsprechende Öffnungen im Flansch 30 erstrecke Gewindebolzen 20 geschraubt werden. Dadurch wird der Gassack 12 im Bereich des Gassackmundes 14 zwischen dem Rahmenteil 16 und dem Flansch 30 geklemmt.

Wie insbesondere Figur 1 zu entnehmen ist, ist die Druckgasquelle 25 in Längsrichtung im wesentlichen rechtwinkelig zur Einströmquerschnittsfläche F ausgerichtet. Die Befestigungseinrichtung 24 umgibt die Druckgasquelle 25 nur im Bereich des Aufnahmeendes 46 und weist deshalb ein geringes Bauvolumen auf. Beide Klemmteile 26, 28 sind als Kunststoffspritzgußteile ausgeführt, wobei auch eine Ausführung als Leichtmetalldruckgußteil möglich ist. Die Befestigung sämtlicher Teile aneinander und die Befestigung des Gassack-Moduls 10 am Fahrzeug sind sehr einfach, so daß die Montagezeit sehr kurz ist.

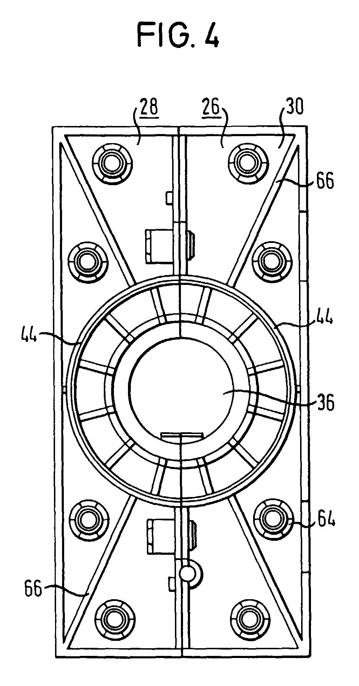

Figur 4 ist zusätzlich noch zu entnehmen, daß einige Rippen 66 rückseitig am Flansch 30 angeformt sind und die Befestigungseinrichtung 24 versteift.

Nach Zündung einer pyrotechnischen Hilfsladung zur Aktivierung des Gassack-Moduls 10 strömt das gespeicherte Gas aus der Druckgasquelle 25 stirnseitig aus und in den Gassack 12. Bei der Aktivierung der Druckgasquelle 25 wird eine chemische Reaktion des Druckgases eingeleitet, die zu einer Zunahme der Temperatur des freigesetzten Gases und somit zu einer Zunahme des Gasvolumens führt.

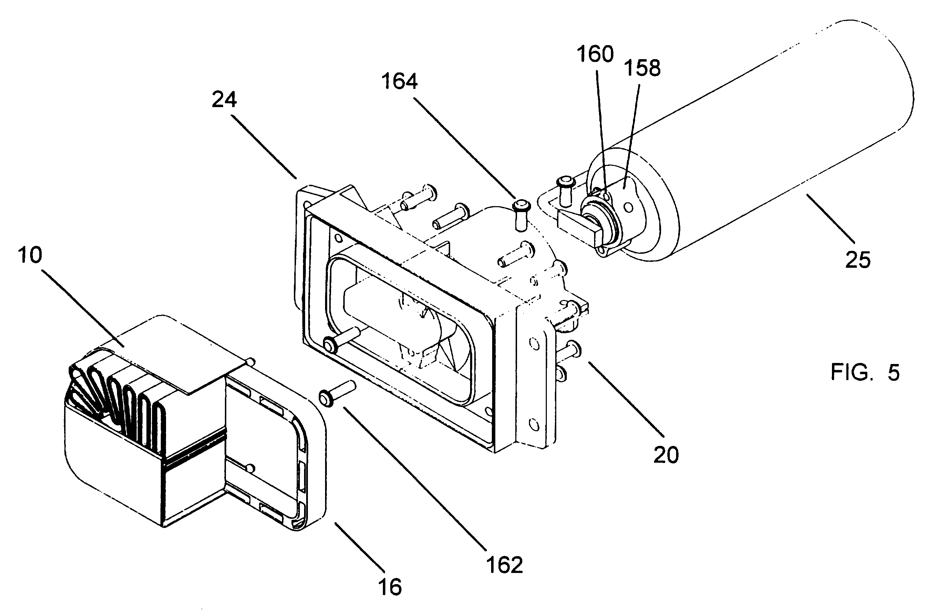

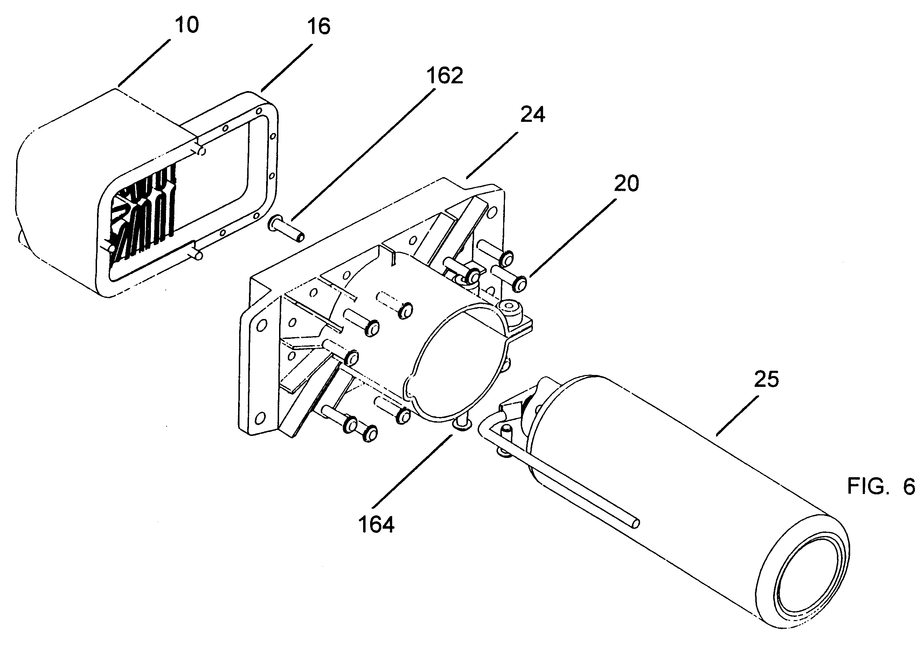

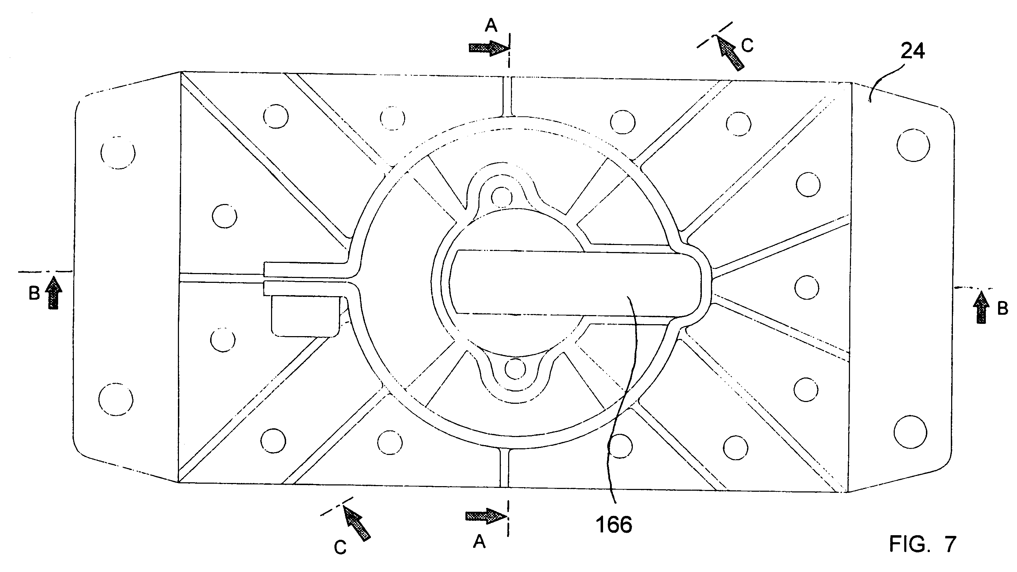

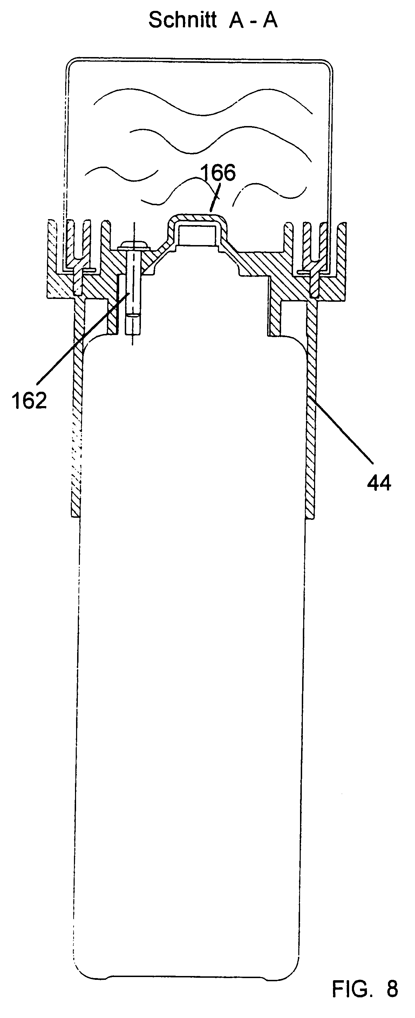

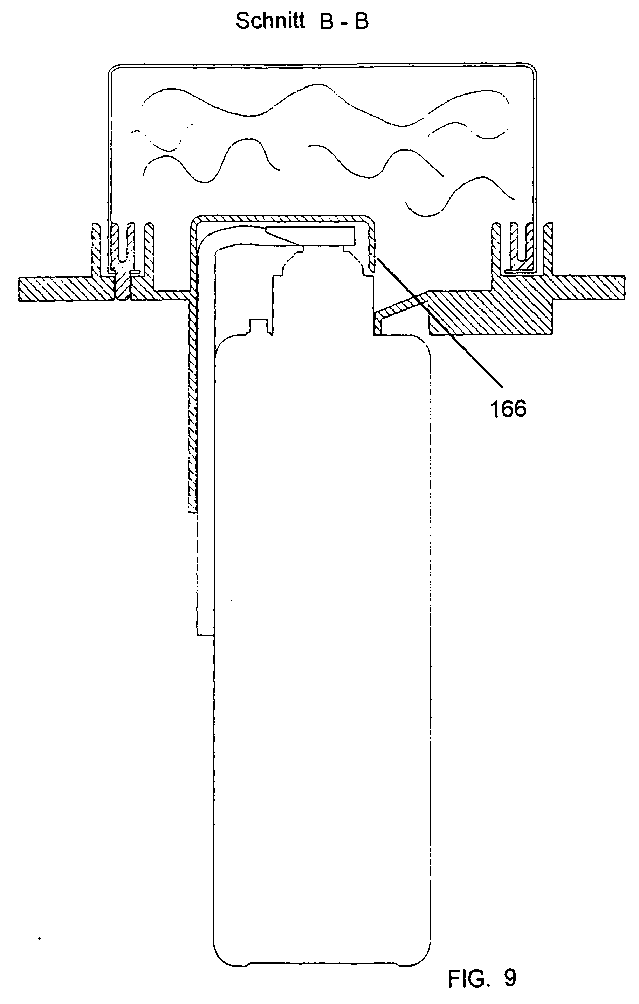

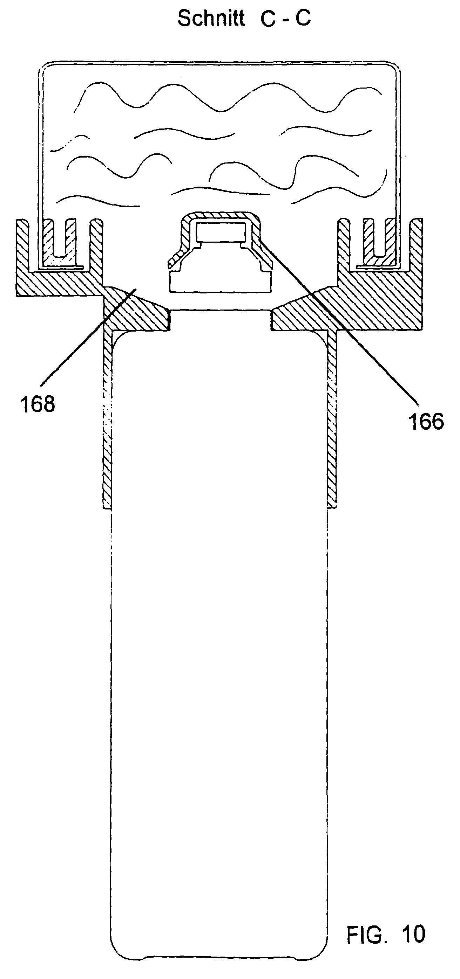

Bei der in den Figuren 5 bis 10 gezeigten zweiten Ausführungsform des Gassack-Moduls ist die Befestigungseinrichtung 24 einteilig ausgebildet. Die Druckgasquelle 25 weist keinen sich verjüngenden Halsabschnitt auf. Anstatt der Abflachung 58 sind als Drehsperre gegenüberliegende seitliche Vorsprünge 158 vorgesehen, die eine stirnseitige Gewindeöffnung 160 haben. Die Druckgasquelle 25 wird stirnseitig in die Befestigungseinrichtung 24 geschoben und stirnseitig mit ihr über Schrauben 162 verbunden, die in die Gewindeöffnungen 160 eindringen. Darüber hinaus sind auch radial verlaufende Klemmschrauben 164 vorgesehen, die die Druckgasquelle 25 seitlich klemmen. Gewindebolzen 20 ragen von der Befestigungseinrichtung zum Rahmenteil 16 und drücken dieses an das Befestigungsteil 24. An der Befestigungseinrichtung 24 ist einteilig eine haubenartige Abdeckung 166 angeformt, deren Verlauf in den Figuren 7 bis 10 gezeigt ist. Die Abdeckung 166 soll die elektrischen Anschlußteile, also das Zündkabel 52 und den Stecker, mit dem der Anschluß zum Zünder 50 erfolgt, vor direkter Anströmung durch heißes Druckgas schützen. Die Abdeckung 166 ist jedoch so gestaltet, daß noch zahlreiche Kanäle 168 vorhanden sind, über die das Druckgas in den Gassack einströmen kann.

## Patentansprüche

1. Gassack-Modul mit
einem gefalteten Gassack (12), der einen Einblasmund (14) aufweist,
einem Rahmenteil (16) zum Befestigen des Gassacks (12), der im Inneren des Gassacks (12) angeordnet ist und den Einblasmund (14) umgibt,
einer rohrförmigen Druckgasquelle (25), die ein Ausströmende (46) aufweist, und
einer Befestigungseinrichtung (24), durch die die Lage des Gassacks (12) relativ zur Druckgasquelle (25) festgelegt wird,
dadurch gekennzeichnet, daß sich die Druckgasquelle (25) in Längsrichtung im wesentlichen rechtwinkelig zu der durch den Einblasmund (14) definierten Einströmquerschnittsfläche (F) des Gassacks (12) erstreckt.

2. Gassack-Modul nach Anspruch 1, dadurch gekennzeichnet, daß die Befestigungseinrichtung (24) aus mehreren, aneinander arretierbaren Klemmteilen (26, 28) zusammengesetzt ist, zwischen denen die Druckgasquelle (25) geklemmt ist.

3. Gassack-Modul nach Anspruch 2, dadurch gekennzeichnet, daß die Befestigungseinrichtung (24) eine Öffnung (36) zur Aufnahme und zum radialen Klemmen der Druckgasquelle (25) im Bereich des Ausströmendes (46) aufweist und daß jedes Klemmteil (26, 28) eine Teilöffnung umfaßt und sich die Teilöffnungen zu der der Aufnahme der Druckgasquelle (25) dienenden Öffnung (36) ergänzen.

4. Gassack-Modul nach Anspruch 1, dadurch gekennzeichnet, daß die Befestigungseinrichtung (24) einteilig ausgeführt ist und der Gasgenerator stirnseitig an dem Ausströmende (46) an der Befestigungseinrichtung (24) angebracht ist.

5. Gassack-Modul nach einem der vorstehenden Ansprüche, dadurch gekennzeichnet, daß die Druckgasquelle (25) einen kreiszylindrischen Mantelabschnitt von im wesentlichen gleichbleibendem Querschnitt aufweist und die Befestigungseinrichtung (24) den Mantelabschnitt nahe des Ausströmendes (46) erfaßt.

6. Gassack-Modul nach einem der vorstehenden Ansprüche, dadurch gekennzeichnet, daß der Gasgenerator stirnseitig am Ausströmende (46) mit der Befestigungseinrichtung (24) verschraubt ist.

7. Gassack-Modul nach einem der vorstehenden Ansprüche, dadurch gekennzeichnet, daß sich die Druckgasquelle (25) in Richtung Ausströmende (46) hin verjüngt und einen Halsabschnitt (48) aufweist und daß die Befestigungseinrichtung (24) die Druckgasquelle (25) im Bereich des Halbabschnitts (48) klemmt.

8. Gassack-Modul nach einem der vorstehenden Ansprüche, dadurch gekennzeichnet, daß die Befestigungseinrichtung (24) einen stirnseitigen Flansch (30) aufweist, an dem das Rahmenteil (16) arretiert werden kann, und daß der Gassack (12) zwischen dem Rahmenteil (16) und dem Flansch (30) im Bereich seines Einblasmundes (14) geklemmt ist.

9. Gassack-Modul nach Anspruch 8, dadurch gekennzeichnet, daß an den stirnseitigen Flansch (30) ein Rohrabschnitt (44) angeformt ist, dessen Inneres die Öffnung (36) zur Aufnahme der Druckgasquelle (25) bildet.

10. Gassack-Modul nach einem der vorstehenden Ansprüche, dadurch gekennzeichnet, daß die Befestigungseinrichtung (24) Befestigungsmittel (70) aufweist, mittels denen das Gassack-Modul (10) am Fahrzeug arretiert werden kann.

11. Gassack-Modul nach einem der vorstehenden Ansprüche, dadurch gekennzeichnet, daß die Druckgasquelle (25) eine mantelseitige Abflachung (58) oder Vorsprung (158) und die Befestigungseinrichtung (24) eine entsprechende, daran angreifende Drehsperre (60) aufweist.

12. Gassack-Modul nach einem der vorstehenden Ansprüche, dadurch gekennzeichnet, daß das Ausströmende (46) der Druckgasquelle (25) teilweise in das Innere des Gassacks (12) ragt.

13. Gassack-Modul nach einem der vorstehenden Ansprüche, dadurch gekennzeichnet, daß in der Befestigungseinrichtung (24) wenigstens ein Kabelführungskanal (54) zur lagesicheren Arretierung eines Zündkabels (52) vorgesehen ist.

14. Gassack-Modul nach einem der vorstehenden Ansprüche, dadurch gekennzeichnet, daß die Befestigungseinrichtung (24) aus mehreren Kunststoffspritzgußteilen besteht.

15. Gassack-Modul nach einem der Ansprüche 1 bis 13, dadurch gekennzeichnet, daß die Befestigungseinrichtung (25) aus mehreren Leichtmetalldruckgußteilen besteht.

16. Gassack-Modul nach einem der vorstehenden Ansprüche, dadurch gekennzeichnet, daß die Aufnahmeöffnung (36) zum Gassack (12) hin durch einen ringförmigen, an der Befestigungseinrichtung (24) angeformten Dichtbund (56) abgeschlossen ist, der gasdicht an der Druckgasquelle (25) anliegt.

17. Gassack-Modul nach einem der vorstehenden Ansprüche, dadurch gekennzeichnet, daß eine haubenartige Abdeckung (166) im Gassack-Modul vorgesehen ist, die das Ausströmende (46) teilweise umgibt und wobei elektrische Anschlußteile zum Aktivieren der Druckgasquelle vorgesehen sind, die vor direktem Anströmen durch heißes Gas durch die Abdeckung (166) geschützt sind.
